(19)

Europäisches
Patentamt
European
Patent Office
Office européen
des brevets

(11) **EP 4 345 688 A1**

(12) **EUROPEAN PATENT APPLICATION**

(43) Date of publication:
**03.04.2024 Bulletin 2024/14**

(21) Application number: **23160933.0**

(22) Date of filing: **09.03.2023**

(51) International Patent Classification (IPC):
**G06N 3/045** (2023.01)    **G06N 3/096** (2023.01)

(52) Cooperative Patent Classification (CPC):
**G06N 3/045; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 NL 2033155**
**08.03.2023 NL 2034291**

(71) Applicant: **NavInfo Europe B.V.**
**5657 DB Eindhoven (NL)**

(72) Inventors:
• **VARMA, Arnav**
**5657 DB Eindhoven (NL)**
• **ARANI, Elahe**
**5657 DB Eindhoven (NL)**
• **ZONOOZ, Bahram**
**5657 DB Eindhoven (NL)**

(74) Representative: **van Breda, Jacobus**
**Octrooibureau Los & Stigter B.V.**
**P.O. Box 20052**
**1000 HB Amsterdam (NL)**

Remarks:
Amended claims in accordance with Rule 137(2) EPC.

(54) **METHOD AND SYSTEM FOR RELATIONAL GENERAL CONTINUAL LEARNING WITH MULTIPLE MEMORIES IN ARTIFICIAL NEURAL NETWORKS**

(57)    A computer-implemented method comprising the step of formulating a continual learning algorithm with both element similarity as well as relational similarity between the stable and plastic model in a dual-memory setup with rehearsal. While the method of the current invention comprises the step of using only two memories to simplify the analysis of impact of relational similarity, said method can be trivially extended to more than two memories. Specifically, the plastic model learns on the data stream as well as on memory samples, while the stable model maintains an exponentially moving average of the plastic model, resulting in a more generalizable model. Simultaneously, to mitigate forgetting and to enable forward transfer, the stable model distills instance-wise and relational knowledge to the plastic model on memory samples. Instance-wise knowledge distillation maintains element similarities, while relational similarity loss maintains relational similarities. The memory samples are maintained in a small constant-sized memory buffer which is updated using reservoir sampling. The method of the current invention was tested under multiple evaluation protocols, showing the efficacy of relational similarity for continual learning with dual-memory setup and rehearsal.

Fig. 1

EP 4 345 688 A1

**Description**

The invention relates to a computer-implemented method and system for relational general continual learning with multiple memories in artificial neural networks.

**General Description**

Deep Neural Networks undergo catastrophic forgetting of previous information when trying to learn continually from data streams [1]. Research in continual learning has approached the challenge of mitigating forgetting from multiple perspectives. First, Regularization-based approaches [2, 3, 4] constrain updates to parameters important to previously seen information. Parameter-isolation based methods [5, 6], meanwhile, assign different sets of parameters to different tasks, preventing interference between tasks. Finally, rehearsal-based methods [7, 8] retrain the network on previously seen information from a memory-buffer. Of these, rehearsal-based methods have been proven to work even under complex and more realistic evaluation protocols [9, 10]. However, the performance of rehearsal-based systems still lags behind regular training, where all data is available at once, indicating a gap in the construction of these learning systems, which might be deployed in self-driving cars, home robots, translators, recommender systems etc..

The human brain is one of the most successful learning systems we know. Humans are capable of continuously learning complex new tasks without forgetting previous tasks, while also successfully transferring information between past and previous tasks [11]. This includes intricate interactions between multiple complementary learning systems (CLS theory), learning at different rates. One can distinguish between plastic learners and stable learners. The fast so called "plastic" learners are responsible for quick adaptation to new information, whereas the slow "stable" learners are responsible for consolidating information from the fast learners into more generalizable forms [12]. These learners interact to form cognitive representations that involve both elemental as well as relational similarities [13]. For e.g. humans not only maintain knowledge of heights of objects across time, but also knowledge of relative heights such as A is taller than B. Relational similarities lead to structure-consistent mappings that enable abstraction, serial higher cognition, and reasoning. Therefore, inculcating these aspects of human learning systems could boost continual learning [13]. Motivated by CLS theory of human learning, recent research has augmented rehearsal-based methods with multiple interacting memories, further improving their performance [14, 15, 16]. One mode of interaction consists of stable models slowly consolidating information from plastic models adapting quickly to new information, into more generalizable forms [14, 15]. Additionally, to mitigate forgetting, the plastic models are constrained to maintain element similarity with the stable models for previous experiences through instance-wise knowledge distillation, forming another mode of interaction [14, 15, 16]. Enforcing relational similarities between models has been attempted through relational knowledge distillation, which constrains models to maintain higher-order relations between representations of the data-points [17].

Drawing from linguistic structuralism, [17] suggests that the relational similarities among samples are vital knowledge to be taken into account when distilling knowledge from a teacher to a student. To this end, they introduce losses with the aim of maintaining pairwise distances and triplet-wise angles between samples in the stable teacher's and learning student's subspaces. Similarity-preserving knowledge distillation [18], meanwhile, attempts to integrate knowledge of pairwise similarities of activations in the teacher into the student. Variants of these losses have also been proposed, where class-wise relations are further taken into account using class prototypes. Following the success of these methods, newer methods have extended them to applications such as medical image classification [19] and image translation [20]. However, the approaches discussed so far focus exclusively on regular training protocols, where complete data is available at all times, and not on continual learning, where the data streams with bounded access to previous data.

While a few continual learning methods such as [24], [25], [26], [28] have attempted to capture relational data, they either only work with innately relational data in natural language processing, or only capture instance-wise relations using approaches such as self-supervised training, and not higher-order relational similarity at the data level that can be captured by relational knowledge distillation.

Among the continual learning methods that do employ higher-order relational similarity is [21], which attempts to stabilize the angle relationships between triplets in exemplar graphs for few-shot continual learning, where the base-task has many classes and the remaining classes are divided across multiple tasks with few examples per class. Nevertheless, this is a much simpler setting as the majority of the information is learnt early on, reducing the impact of forgetting. Furthermore, this approach is not applicable to general continual learning as it cannot deal with blurry task boundaries. Finally, Relational-Guided Representation learning for Data-Free Class Incremental Learning (R-DFCIL) [22] applied angle-wise distillation loss on the samples of the new task in a data-free scenario, with a model trained on the previous tasks acting as a teacher. As with previous methods, [22] is also incapable of dealing with blurry task boundaries. Moreover, [22] is concerned with the data-free setting, which is complex to tune as it requires training a generator for previously seen images, can introduce a distribution shift on past data, and is also unnecessary for practical deployment as keeping a small memory-buffer for rehearsal is only a small memory overhead.

So far, no prior art disclosed using higher-order relational similarities at the data level for multi-memory continual learning with rehearsal, that can deal with blurry task-boundaries. It is an object of the current invention to correct the shortcomings of the prior art. This and other objects which will become apparent from the following disclosure, are provided with a computer-implemented method for continual learning in artificial neural networks, a computer-readable medium, and an autonomous vehicle comprising a data processing system, having the features of one or more of the appended claims.

In a first aspect of the invention, the computer-implemented method for learning of artificial neural networks on a continual stream of tasks comprises the steps of:

- providing a memory buffer for storing data samples originating externally from the computer;
- providing at least one plastic model configured to learn on samples from a current stream of tasks and/or on samples stored in the memory buffer;
- providing at least one stable model configured to maintain an exponentially moving average of the at least one plastic model; and
- distilling knowledge of individual representations of the outside world from the at least one stable model into the at least one plastic model by transferring elemental similarities from the at least one stable model into the at least one plastic model, using an elemental knowledge distillation loss such as a mean squared error loss;

  - wherein the method comprises the step of transferring relations between said individual representations from the at least one stable model into the at least one plastic model by enforcing relational similarities between the at least one stable model and the at least one plastic model, using a relational similarity loss such as a cross-correlation-based relational similarity loss.

The computer-implemented method of the current invention preferably comprises the step of training the at least one plastic model by calculating a task loss, such as a cross-entropy loss, on samples selected from a current stream of tasks and from samples stored in the memory buffer.

The computer-implemented method preferably comprises the step of calculating the elemental knowledge distillation loss on samples selected from the memory buffer.

The computer-implemented preferably comprises the step of calculating the relational similarity loss on samples selected from a current stream of tasks and a from samples stored in the memory buffer.

The computer-implemented method of the current invention preferably comprises the step of calculating a first total loss by:

- multiplying the elemental knowledge distillation loss by a first pre-defined weight to calculate a weighted elemental knowledge distillation loss; and
- calculating a combination of the task loss and the weighted elemental knowledge distillation loss.

The computer-implemented method of the current invention preferably comprises the steps of:

- providing the memory buffer as a bounded memory buffer; and
- updating said bounded memory buffer using reservoir sampling.

The computer-implemented method of the current invention preferably comprises the step of transferring relational similarities in both the memory as well as current samples from the at least one stable model to the at least one plastic model, using a relational similarity loss such as a cross-correlation-based relational similarity loss.

The computer-implemented method of the current invention preferably comprises the step of calculating a second total loss by:

- multiplying the relational similarity loss by a second pre-defined weight to calculate a weighted relational knowledge distillation loss; and
- calculating a combination of the first total loss and the weighted relational knowledge distillation loss.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, an autonomous vehicle is proposed comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The invention will hereinafter be further elucidated with reference to the drawing of an exemplary embodiment of a computer-implemented method, a computer program and an autonomous vehicle comprising a data processing system according to the invention that is not limiting as to the appended claims.

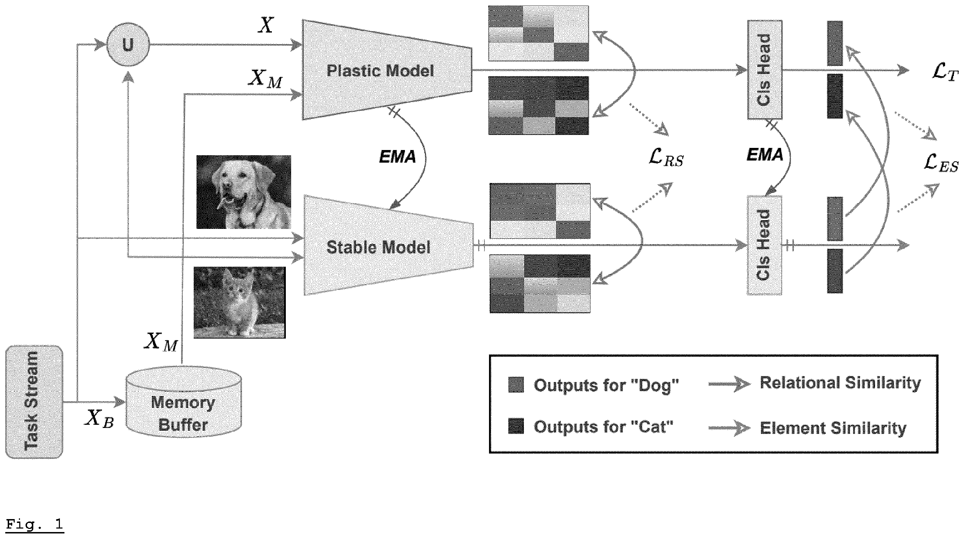

In the drawings, figure 1 shows a schematic diagram for the computer-implemented method according to the invention.

Whenever in the figures the same reference numerals are applied, these numerals refer to the same parts.

**Detailed description**

The method of the current invention can be divided into the following components:

*Continual learning with dual memories, element similarity, and rehearsal*

The method of the current invention comprises the step of formulating a dual-memory setup for continual learning. Concretely, consider a plastic model P parameterized by $W_P$ and a stable model S parameterized by $W_S$. The plastic model is learnable, whereas the stable model is maintained as an exponentially moving average (EMA) of the plastic model [14]. This allows the method of the current invention to deal with blurry task boundaries without having to explicitly rely on task boundaries for building "teacher" models. Additionally, the method of the current invention comprises the step of employing a bounded memory-buffer M, updated using reservoir sampling, which aids the buffer in approximating the distribution of samples seen by the models [23]. For an update coefficient $\alpha$ and an update frequency $v \in v$ $\in (0, 1)$, the method of the current invention comprises the step of updating the stable model with probability $vv$ at training iteration n:

$$\alpha_n = min(1 - 1/(n + 1), \alpha)$$
$$W_S = \alpha_n W_S + (1 - \alpha_n)W_P$$

*(Equation 1)*

However, this only helps in dealing with forgetting in the stable model. Ideally, the plastic model should have a mechanism for remembering earlier knowledge i.e. show element similarity of representations across time, and to have some forward transfer from this knowledge i.e. reason based on past experience. Moreover, if the plastic model undergoes catastrophic forgetting, it would hamper the stable model as well (See Equation 1), which further necessitates the need for such a mechanism. Consequently, the method of the current invention comprises the step of distilling the knowledge of representations of memory samples [29] from the stable teacher model, back to the plastic student model. Specifically, at any given point in time, the method of the current invention comprises the step of sampling a batch each from the "current" or "task" stream $(X_B, Y_B)$ and memory $(X_M, Y_M)$. Then, the elemental similarity loss (LES) is defined as:

$$L_{ES}(X_M) = MSE(P(X_M; W_P), S(X_M; W_S))$$
$$= \mathbb{E}_{X_M}\left[\|S(X_M; W_S) - P(X_M; W_P)\|_2^2\right]$$

*(Equation 2)*

where MSE refers to mean squared error. Note that while the method of the current invention comprises the step of using MSE loss, any knowledge-distillation loss is applicable here. Finally, the plastic model needs to learn the task, and is therefore trained with a task-loss (LT) on samples from the current stream of tasks and on samples stored in the memory buffer. This task loss is dependent on the application, and any task-loss can be plugged in trivially. In the case of the method of the current invention, the application is image classification and cross-entropy is used. The total loss for continual learning with dual-memories and rehearsal becomes:

$$L_{multi-mem}\big((X_B, Y_B), (X_M Y_M)\big) = L_T(X_B \cup X_M, Y_B \cup Y_M) + \beta L_{ES}(X_M)$$

*(Equation 3)*

where β is the weight on the Element Similarity loss.

*Relational similarity in dual-memory continual learning:*

Knowledge distillation transfers element similarities i.e. individual representations from a teacher model to a student model. However, there is further knowledge embedded in the relations between representations, which is important to the structure of the representation space as a whole. For e.g. examples from similar classes may lead to similar representations, whereas highly dissimilar classes might lead to highly divergent representations. Relational similarity aids the learning of structurally-consistent mappings that enable higher cognition and reasoning. Therefore, the method of the current invention comprises the step of additionally instilling relational similarity between the teacher stable model and the student plastic model on both the memory as well as current samples.

Specifically, the corresponding representations from the pre-final layers of the stable and plastic model are batch-normalized, represented by $A_i^{(S)}, A_i^{(P)} \in \mathbb{R}^{b_i \times N_D}$ respectively, where i can be M or B indicating the batch i.e. memory or current to which the representation corresponds. $b_i$ is the size of the corresponding batch, and ND is the dimension of the representation at the pre-final layer. To ensure relational similarity, the method of the current invention comprises the step of enforcing similarities and dissimilarities in activations of different samples using a relational similarity loss that computes a cross-correlation-based measure [30]. Note that while the method of the current invention comprises the step of using this novel relational similarity loss, any relational knowledge distillation loss can be plugged in trivially here. The relational similarity loss (LRS) is obtained as follows:

$$G_i = A_i^{(P)} A_i^{(S)\top} / b_i$$

$$RS_i = \sum_{j,k} (1 - G_i[j,k])^2 + \lambda \sum_j \sum_{k \neq j} G_i[j,k]^2$$

$$L_{\text{RS}}(X_M, X_B) = RS_M + RS_B.$$

*(Equation 4)*

where λ is a weight on part of the loss. G is a cross-correlation matrix and the relational similarity tries to correlate representations of the same sample for stable and plastic models while simultaneously decorrelating the representations from different samples.

Putting everything together (Equations 3 and 4), the total loss for continual learning becomes:

$$L_{\text{total}} = L_{\text{multi-mem}}((X_B, Y_B), (X_M Y_M)) + \gamma L_{\text{RS}}(X_M, X_B)$$

*(Equation 5)*

where γ is a weight on the Relational Similarity loss.

Figure 1 shows the complete schematic for the method of the current invention with a sample memory batch of size 2, containing one image each of a dog and cat. EMA = Exponential moving average, U=Union.

**Results**

Table 1:

Results on sequential variants of CIFAR100 for multiple memory buffer sizes averaged over multiple seeds. The method of the invention improves over state-of-the-art methods. Best results are in bold. Second best results are underlined.

| Method/Buffer Size | 200 | 500 |
|---|---|---|
| ER[23] | 21.40 | 28.02 |
| DER++[10] | 29.60 | 41.40 |
| Co2L[26] | 31.90 | 39.21 |
| Mean-ER[14] | 46.55 | 53.42 |
| Ours | **48.67** | **54.66** |

Embodiments of the present invention can include every combination of features that are disclosed herein independently from each other.

Typical application areas of the invention include, but are not limited to:

- Road condition monitoring
- Recommender systems
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Matthias Delange, Rahaf Aljundi, Marc Masana, Sarah Parisot, Xu Jia, Ales Leonardis, Greg Slabaugh, and Tinne Tuytelaars. A continual learning survey: Defying forgetting in classification tasks. IEEE Transactions on Pattern Analysis and Machine Intelligence, 2021.

2. James Kirkpatrick, Razvan Pascanu, Neil Rabinowitz, Joel Veness, Guillaume Desjardins, Andrei A Rusu, Kieran Milan, John Quan, Tiago Ramalho, Agnieszka Grabska-Barwinska, et al. Overcoming catastrophic forgetting in neural networks. Proceedings of the national academy of sciences, 114(13) :3521-3526, 2017.

3. Jonathan Schwarz, Wojciech Czarnecki, Jelena Luketina, Agnieszka Grabska-Barwinska, Yee Whye Teh, Razvan Pascanu, and Raia Hadsell. Progress & compress: A scalable framework for continual learning. In International Conference on Machine Learning, pp. 4528-4537. PMLR, 2018.

4. Friedemann Zenke, Ben Poole, and Surya Ganguli. Continual learning through synaptic intelligence. In International Conference on Machine Learning, pp. 3987-3995. PMLR, 2017.

5. Yoon, J., Yang, E., Lee, J. and Hwang, S.J., 2017. Lifelong learning with dynamically expandable networks. arXiv preprint arXiv:1708.0154

6. Tameem Adel, Han Zhao, and Richard E. Turner. Continual learning with adaptive weights (CLAW). In 8th International Conference on Learning Representations, ICLR 2020, Addis Ababa, Ethiopia, April 26-30, 2020. Open-Review.net, 2020. URL https://openreview.net/forum?id=Hklso24Kwr.

7. David Lopez-Paz and Marc'Aurelio Ranzato. Gradient episodic memory for continual learning. In Advances in neural information processing systems, pp. 6467-6476, 2017.

8. Arslan Chaudhry, Marc'Aurelio Ranzato, Marcus Rohrbach, and Mohamed Elhoseiny. Efficient lifelong learning with A-GEM. In 7th International Conference on Learning Representations, ICLR 2019, New Orleans, LA, USA, May 6-9, 2019. OpenReview.net, 2019. URL https://openreview.net/forum?id=Hkf2 sC5FX.

9. Sebastian Farquhar and Yarin Gal. Towards Robust Evaluations of Continual Learning. Lifelong Learning: A Reinforcement Learning Approach Workshop at ICML, 2018.

10. Buzzega, P., Boschini, M., Porrello, A., Abati, D. and Calderara, S., 2020. Dark experience for general continual learning: a strong, simple baseline. Advances in neural information processing systems, 33, pp.15920-15930.

11. Raia Hadsell, Dushyant Rao, Andrei A Rusu, and Razvan Pascanu. Embracing change: Continual learning in deep neural networks. Trends in cognitive sciences, 24(12) :1028-1040, 2020.

12. O'Reilly, Randall C., et al. "Complementary learning systems." Cognitive science 38.6 (2014): 1229-1248.

13. Halford, Graeme S., William H. Wilson, and Steven Phillips. "Relational knowledge: The foundation of higher cognition." Trends in cognitive sciences 14.11 (2010): 497-505.

14. Elahe Arani, Fahad Sarfraz, & Bahram Zonooz (2022). Learning Fast, Learning Slow: A General Continual Learning Method based on Complementary Learning System. In International Conference on Learning Representations.

15. Sarfraz, Fahad, Elahe Arani, and Bahram Zonooz. "SYNERgy between SYNaptic consolidation and Experience Replay for general continual learning." arXiv preprint arXiv:2206.04016 (2022).

16. Pham, Quang, Chenghao Liu, and Steven Hoi. "Dualnet: Continual learning, fast and slow." Advances in Neural Information Processing Systems 34 (2021): 16131-16144.

17. Park, Wonpyo, et al. "Relational knowledge distillation." Proceedings of the IEEE/CVF Conference on Computer Vision and Pattern Recognition. 2019.

18. Tung, Frederick, and Greg Mori. "Similarity-preserving knowledge distillation." Proceedings of the IEEE/CVF International Conference on Computer Vision. 2019.

19. Xing, Xiaohan, et al. "Categorical Relation-Preserving Contrastive Knowledge Distillation for Medical Image Classification." International Conference on Medical Image Computing and Computer-Assisted Intervention. Springer, Cham, 2021.

20. Li, Zeqi, Ruowei Jiang, and Parham Aarabi. "Semantic relation preserving knowledge distillation for image-to-image translation." European conference on computer vision. Springer, Cham, 2020.

21. Dong, Songlin, et al. "Few-shot class-incremental learning via relation knowledge distillation." Proceedings of the AAAI Conference on Artificial Intelligence. Vol. 35. No. 2. 2021.

22. Gao, Qiankun, et al. "R-DFCIL: Relation-Guided Representation Learning for Data-Free Class Incremental Learning." arXiv preprint arXiv:2203.13104 (2022).

23. Riemer, Matthew, et al. "Learning to learn without forgetting by maximizing transfer and minimizing interference." arXiv preprint arXiv:1810.11910 (2018).

24. Han, Xu, et al. "Continual relation learning via episodic memory activation and reconsolidation." Proceedings of the 58th Annual Meeting of the Association for Computational Linguistics. 2020.

25. Zhao, Kang, et al. "Consistent Representation Learning for Continual Relation Extraction." arXiv preprint arXiv:2203.02721 (2022).

26. Cha, Hyuntak, Jaeho Lee, and Jinwoo Shin. "Co2l: Contrastive continual learning." Proceedings of the IEEE/CVF International Conference on Computer Vision. 2021.

27. Aljundi, Rahaf, et al. "Gradient based sample selection for online continual learning." Advances in neural information processing systems 32 (2019).

28. Bhat, Prashant, Bahram Zonooz, and Elahe Arani. "Task Agnostic Representation Consolidation: a Self-supervised based Continual Learning Approach." arXiv preprint arXiv:2207.06267 (2022).

29. Bhat, Prashant, Bahram Zonooz, and Elahe Arani. "Consistency is the key to further mitigating catastrophic forgetting in continual learning." arXiv preprint arXiv:2207.04998 (2022).

30. Zbontar, Jure, et al. "Barlow twins: Self-supervised learning via redundancy reduction." International Conference on Machine Learning. PMLR, 2021.

**Claims**

1. A computer-implemented method for learning of artificial neural networks on a continual stream of tasks, wherein said method comprises the steps of:

   - providing a memory buffer for storing data samples;
   - providing at least one plastic model configured to learn on samples from a current stream of tasks and/or on samples stored in the memory buffer; and
   - providing at least one stable model configured to maintain an exponentially moving average of the at least one plastic model;

   **characterized in that** the method comprises the steps of:

   - distilling knowledge of individual representations from the at least one stable model into the at least one plastic model by transferring elemental similarities from the at least one stable model into the at least one plastic model, using an elemental knowledge distillation loss such as a mean squared error loss; and
   - transferring relations between said individual representations from the at least one stable model into the at least one plastic model by enforcing relational similarities between the at least one stable model and the at least one plastic model, using a relational similarity loss such as a cross-correlation-based relational similarity loss.

2. The computer-implemented method according to claim 1, **characterized in that** the method comprises the step of training the at least one plastic model by calculating a task loss, such as a cross-entropy loss, on samples selected from a current stream of tasks and a stream from samples stored in the memory buffer.

3. The computer-implemented method according to claim 1 or 2, **characterized in that** the method comprises the step of calculating the elemental knowledge distillation loss on samples selected from the memory buffer.

4. The computer-implemented method according to any one of the preceding claims, **characterized in that** the method comprises the step of calculating the relational similarity loss on samples selected from a current stream of tasks and a stream from samples stored in the memory buffer.

5. The computer-implemented method according to any one of the preceding claims, **characterized in that** the method comprises the step of calculating a first total loss by:

   - multiplying the elemental knowledge distillation loss by a first pre-defined weight to calculate a weighted elemental knowledge distillation loss; and
   - calculating a combination of the task loss and the weighted elemental knowledge distillation loss.

6. The computer-implemented method according to any one of the preceding claims, **characterized in that** the method comprises the steps of:

   - providing the memory buffer as a bounded memory buffer; and
   - updating said bounded memory buffer using reservoir sampling.

7. The computer-implemented method according to any one of the preceding claims, **characterized in that** the method comprises the step of transferring relational similarities in both the memory samples and the current samples from the at least one stable model to the at least one plastic model, using a relational similarity loss such as a cross-correlation-based relational similarity loss.

8. The computer-implemented method according to any one of the preceding claims, **characterized in that** the method comprises the step of calculating a second total loss by:

   - multiplying the relational similarity loss by a second pre-defined weight to calculate a weighted relational knowledge distillation loss; and
   - calculating a combination of the first total loss and the weighted relational knowledge distillation loss.

9. A computer-readable medium provided with a computer program, **characterized in that** when said computer program is loaded and executed by a computer, said computer program causes the computer to carry out the steps of the computer-implemented method according to any one of claims 1-8.

10. An autonomous vehicle comprising a data processing system loaded with a computer program, **characterized in that** said program is arranged for causing the data processing system to carry out the steps of the computer-implemented method according to any one of claim 1-8 for enabling said autonomous vehicle to continually adapt and acquire knowledge from an environment surrounding said autonomous vehicle.

**Amended claims in accordance with Rule 137(2) EPC.**

1. A computer-implemented method for learning of artificial neural networks on a continual stream of tasks, wherein said method comprises the steps of:

   - providing a memory buffer for storing data samples;
   - providing at least one plastic model configured to learn on samples from a current stream of tasks and/or on samples stored in the memory buffer; and
   - providing at least one stable model configured to maintain an exponentially moving average of the at least one plastic model;

   **characterized in that** the method comprises the steps of:

   - distilling knowledge of individual representations from the at least one stable model into the at least one plastic model by transferring elemental similarities from the at least one stable model into the at least one plastic model, using an elemental knowledge distillation loss such as a mean squared error loss;
   - transferring relations between said individual representations from the at least one stable model into the at least one plastic model by enforcing relational similarities between the at least one stable model and the at least one plastic model, using a relational similarity loss such as a cross-correlation-based relational similarity loss; and
   - calculating the relational similarity loss on samples selected from a current stream of tasks and a stream from samples stored in the memory buffer.

2. The computer-implemented method according to claim 1, **characterized in that** the method comprises the step of training the at least one plastic model by calculating a task loss, such as a cross-entropy loss, on samples selected from a current stream of tasks and a stream from samples stored in the memory buffer.

3. The computer-implemented method according to claim 1 or 2, **characterized in that** the method comprises the step of calculating the elemental knowledge distillation loss on samples selected from the memory buffer.

4. The computer-implemented method according to any one of the preceding claims, **characterized in that** the method comprises the step of calculating a first total loss by:

   - multiplying the elemental knowledge distillation loss by a first pre-defined weight to calculate a weighted elemental knowledge distillation loss; and
   - calculating a combination of the task loss and the weighted elemental knowledge distillation loss.

5. The computer-implemented method according to any one of the preceding claims, **characterized in that** the method comprises the steps of:

   - providing the memory buffer as a bounded memory buffer; and
   - updating said bounded memory buffer using reservoir sampling.

6. The computer-implemented method according to any one of the preceding claims, **characterized in that** the method comprises the step of transferring relational similarities in both the memory samples and the current samples from the at least one stable model to the at least one plastic model, using a relational similarity loss such as a cross-correlation-based relational similarity loss.

7. The computer-implemented method according to any one of the preceding claims, **characterized in that** the method comprises the step of calculating a second total loss by:

- multiplying the relational similarity loss by a second pre-defined weight to calculate a weighted relational knowledge distillation loss; and
- calculating a combination of the first total loss and the weighted relational knowledge distillation loss.

8.  A computer-readable medium provided with a computer program, **characterized in that** when said computer program is loaded and executed by a computer, said computer program causes the computer to carry out the steps of the computer-implemented method according to any one of claims 1-7.

9.  An autonomous vehicle comprising a data processing system loaded with a computer program, **characterized in that** said program is arranged for causing the data processing system to carry out the steps of the computer-implemented method according to any one of claim 1-7 for enabling said autonomous vehicle to continually adapt and acquire knowledge from an environment surrounding said autonomous vehicle.

Fig. 1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO CHEN ET AL: "Unsupervised Lifelong Person Re-identification via Contrastive Rehearsal", ARXIV.ORG, CORNELL UNIVERSITY LIBRARY, 201 OLIN LIBRARY CORNELL UNIVERSITY ITHACA, NY 14853, 12 March 2022 (2022-03-12), XP091180485, * abstract * * Sections 3-4.2; page 4 - page 12; figure 2 * | 1-10 | INV. G06N3/045 G06N3/096 |
| X | LIU QUANDE ET AL: "Semi-Supervised Medical Image Classification With Relation-Driven Self-Ensembling Model", IEEE TRANSACTIONS ON MEDICAL IMAGING, IEEE, USA, vol. 39, no. 11, 16 May 2020 (2020-05-16), pages 3429-3440, XP011816696, ISSN: 0278-0062, DOI: 10.1109/TMI.2020.2995518 [retrieved on 2020-10-28] * Sections I-III; page 1 - page 6; figure 1 * | 1-10 | |
| X,D | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * abstract * * Sections 3-4; page 3 - page 5; figure 1 * | 1-10 | |

TECHNICAL FIELDS SEARCHED (IPC)

G06N

-/--

The present search report has been drawn up for all claims

| Place of search | Date of completion of the search | Examiner |
|---|---|---|
| The Hague | 7 August 2023 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 0933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/261593 A1 (YU ZHIDING [US] ET AL) 18 August 2022 (2022-08-18) * paragraph [0072] - paragraph [0106]; figure 2 * * paragraph [0135] - paragraph [0139]; figure 9 * ----- | 1-10 | |
| A | ZHOU LIJIE ET AL: "An Self-supervised Learning & Self-attention Based Method for Defects Classification on PCB Surface Images", 2021 2ND INTERNATIONAL CONFERENCE ON ELECTRONICS, COMMUNICATIONS AND INFORMATION TECHNOLOGY (CECIT), IEEE, 27 December 2021 (2021-12-27), pages 229-234, XP034108588, DOI: 10.1109/CECIT53797.2021.00047 * abstract * * Sections I-III; page 3429 - page 3433; figures 1,2 * ----- | 1-10 | |

TECHNICAL FIELDS SEARCHED (IPC)

The present search report has been drawn up for all claims

| Place of search | Date of completion of the search | Examiner |
|---|---|---|
| The Hague | 7 August 2023 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 16 0933

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2023

| Patent document cited in search report | | Publication date | Patent family member(s) | Publication date |
|---|---|---|---|---|
| US 2022261593 | A1 | 18-08-2022 | CN 114972742 A | 30-08-2022 |
| | | | DE 102022103363 A1 | 18-08-2022 |
| | | | GB 2606816 A | 23-11-2022 |
| | | | US 2022261593 A1 | 18-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHIAS DELANGE ; RAHAF ALJUNDI ; MARC MASANA ; SARAH PARISOT ; XU JIA ; ALES LEONARDIS ; GREG SLABAUGH ; TINNE TUYTE-LAARS.** A continual learning survey: Defying forgetting in classification tasks. *IEEE Transactions on Pattern Analysis and Machine Intelligence,* 2021
- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526
- **JONATHAN SCHWARZ ; WOJCIECH CZARNECKI ; JELENA LUKETINA ; AGNIESZKA GRABSKA-BARWINSKA ; YEE WHYE TEH ; RAZVAN PASCANU ; RAIA HADSELL.** Progress & compress: A scalable framework for continual learning. *International Conference on Machine Learning,* 2018, 4528-4537
- **FRIEDEMANN ZENKE ; BEN POOLE ; SURYA GANGULI.** Continual learning through synaptic intelligence. *International Conference on Machine Learning,* 2017, 3987-3995
- **YOON, J. ; YANG, E. ; LEE, J. ; HWANG, S.J.** Lifelong learning with dynamically expandable networks. *arXiv preprint arXiv:1708.0154,* 2017
- **TAMEEM ADEL ; HAN ZHAO ; RICHARD E. TURNER.** Continual learning with adaptive weights (CLAW). *8th International Conference on Learning Representations, ICLR 2020, Addis Ababa, Ethiopia,* 26 April 2020, https://openreview.net/forum?id=Hklso24Kwr
- **DAVID LOPEZ-PAZ ; MARC'AURELIO RANZATO.** Gradient episodic memory for continual learning. *Advances in neural information processing systems,* 2017, 6467-6476
- **ARSLAN CHAUDHRY ; MARC'AURELIO RANZATO ; MARCUS ROHRBACH ; MOHAMED ELHOSEINY.** Efficient lifelong learning with A-GEM. *7th International Conference on Learning Representations, ICLR 2019, New Orleans, LA, USA,* 06 May 2019, https://openreview.net/forum?id=Hkf2 sC5FX
- **SEBASTIAN FARQUHAR ; YARIN GAL.** Towards Robust Evaluations of Continual Learning. *Lifelong Learning: A Reinforcement Learning Approach Workshop at ICML,* 2018
- **BUZZEGA, P. ; BOSCHINI, M. ; PORRELLO, A. ; ABATI, D. ; CALDERARA, S.** Dark experience for general continual learning: a strong, simple baseline. *Advances in neural information processing systems,* 2020, vol. 33, 15920-15930
- **RAIA HADSELL ; DUSHYANT RAO ; ANDREI A RUSU ; RAZVAN PASCANU.** Embracing change: Continual learning in deep neural networks. *Trends in cognitive sciences,* 2020, vol. 24 (12), 1028-1040
- **O'REILLY ; RANDALL C. et al.** Complementary learning systems. *Cognitive science,* 2014, vol. 38.6, 1229-1248
- **HALFORD, GRAEME S. ; WILLIAM H. WILSON ; STEVEN PHILLIPS.** Relational knowledge: The foundation of higher cognition. *Trends in cognitive sciences,* 2010, vol. 14.11, 497-505
- **ELAHE ARANI ; FAHAD SARFRAZ ; BAHRAM ZONOOZ.** Learning Fast, Learning Slow: A General Continual Learning Method based on Complementary Learning System. *International Conference on Learning Representations,* 2022
- **SARFRAZ, FAHAD ; ELAHE ARANI ; BAHRAM ZONOOZ.** SYNERgy between SYNaptic consolidation and Experience Replay for general continual learning. *arXiv preprint arXiv:2206.04016,* 2022
- **PHAM, QUANG ; CHENGHAO LIU ; STEVEN HOI.** Dualnet: Continual learning, fast and slow. *Advances in Neural Information Processing Systems,* 2021, vol. 34, 16131-16144
- **PARK, WONPYO et al.** Relational knowledge distillation. *Proceedings of the IEEE/CVF Conference on Computer Vision and Pattern Recognition,* 2019
- **TUNG, FREDERICK ; GREG MORI.** Similarity-preserving knowledge distillation. *Proceedings of the IEEE/CVF International Conference on Computer Vision,* 2019
- Categorical Relation-Preserving Contrastive Knowledge Distillation for Medical Image Classification. **XING, XIAOHAN et al.** International Conference on Medical Image Computing and Computer-Assisted Intervention. Springer, 2021
- Semantic relation preserving knowledge distillation for image-to-image translation. **LI, ZEQI ; RUOWEI JIANG ; PARHAM AARABI.** European conference on computer vision. Springer, 2020

- **DONG, SONGLIN et al.** Few-shot class-incremental learning via relation knowledge distillation. *Proceedings of the AAAI Conference on Artificial Intelligence,* 2021, vol. 35 (2
- **GAO, QIANKUN et al.** R-DFCIL: Relation-Guided Representation Learning for Data-Free Class Incremental Learning. *arXiv preprint arXiv:2203.13104,* 2022
- **RIEMER, MATTHEW et al.** Learning to learn without forgetting by maximizing transfer and minimizing interference. *arXiv preprint arXiv:1810.11910,* 2018
- **HAN, XU et al.** Continual relation learning via episodic memory activation and reconsolidation. *Proceedings of the 58th Annual Meeting of the Association for Computational Linguistics,* 2020
- **ZHAO, KANG et al.** Consistent Representation Learning for Continual Relation Extraction. *arXiv preprint arXiv:2203.02721,* 2022
- **CHA, HYUNTAK ; JAEHO LEE ; JINWOO SHIN.** Co2l: Contrastive continual learning. *Proceedings of the IEEE/CVF International Conference on Computer Vision,* 2021
- **ALJUNDI, RAHAF et al.** Gradient based sample selection for online continual learning. *Advances in neural information processing systems,* 2019, vol. 32
- **BHAT, PRASHANT ; BAHRAM ZONOOZ ; ELAHE ARANI.** Task Agnostic Representation Consolidation: a Self-supervised based Continual Learning Approach. *arXiv preprint arXiv:2207.06267,* 2022
- **BHAT, PRASHANT ; BAHRAM ZONOOZ ; ELAHE ARANI.** Consistency is the key to further mitigating catastrophic forgetting in continual learning. *arXiv preprint arXiv:2207.04998,* 2022
- **ZBONTAR, JURE et al.** Barlow twins: Self-supervised learning via redundancy reduction. *International Conference on Machine Learning. PMLR,* 2021